Europäisches Patentamt

European Patent Office

Office européen des brevets

(19)

(11) **EP 1 111 485 A1**

(12) **DEMANDE DE BREVET EUROPEEN**

(43) Date de publication:
**27.06.2001 Bulletin 2001/26**

(51) Int Cl.⁷: **G05B 19/40**, G05B 19/425

(21) Numéro de dépôt: **00403637.2**

(22) Date de dépôt: **21.12.2000**

(84) Etats contractants désignés:
**AT BE CH CY DE DK ES FI FR GB GR IE IT LI LU MC NL PT SE TR**
Etats d'extension désignés:
**AL LT LV MK RO SI**

(30) Priorité: **22.12.1999 FR 9916223**

(71) Demandeurs:
• **LEGRAND**
  **F-87000 Limoges (FR)**

• **LEGRAND SNC**
  **F-87000 Limoges (FR)**

(72) Inventeur: **Cousy Jean-Pierre**
**87430 Verneuil sur Vienne (FR)**

(74) Mandataire: **CABINET BONNET-THIRION**
**12, Avenue de la Grande-Armée**
**75017 Paris (FR)**

(54) **Dispositif de commande d'un appareil adapté à prendre un niveau sélectionné parmi une plage de niveaux, procédé de commande d'un volet roulant à l'aide d'un tel dispositif et module utilisateur pour un tel dispositif**

(57) L'invention concerne un dispositif de commande d'un appareil (300), qui comporte un clavier (110) représentatif d'une plage de niveaux à prendre par l'appareil.

Selon l'invention, il comporte en outre :

- une touche d'arrêt (120) dudit appareil, et
- une unité de traitement (200) pour :

- dans le cas où l'appareil est à l'arrêt et ledit clavier est actionné, faire prendre à l'appareil le niveau cible sélectionné,

- dans le cas où l'appareil est à l'arrêt et la touche d'arrêt est actionnée, maintenir l'appareil à l'arrêt,
- dans le cas où ledit appareil est en fonctionnement et ledit clavier est actionné, faire prendre à l'appareil le niveau cible sélectionné s'il est différent de son niveau courant, et
- dans le cas où l'appareil est en fonctionnement et que la touche d'arrêt est actionnée, arrêter ledit appareil.

FIG . 1

**Description**

La présente invention concerne de manière générale la commande d'appareils, tels que des appareils d'éclairage, des volets roulants, ou encore des appareils de chauffage, adaptés à prendre un niveau sélectionné parmi une plage de niveaux.

Elle concerne plus particulièrement un dispositif de commande qui comporte un clavier représentatif de ladite plage de niveaux pour permettre à un utilisateur de sélectionner un niveau.

Elle concerne également un procédé de commande d'un volet roulant positionné dans une position courante pour l'amener dans une position cible à l'aide d'un tel dispositif de commande, ainsi qu'un module utilisateur pour un tel dispositif.

On connaît déjà un variateur d'intensité lumineuse d'un appareil d'éclairage qui est du type rotatif à potentiomètre pour faire varier l'angle d'ouverture d'un interrupteur électronique dudit appareil d'éclairage. Un tel variateur comprend en outre un interrupteur marche/arrêt pour la mise en marche et l'arrêt de l'appareil d'éclairage.

Par ailleurs, on connaît du document US 5 485 058 un dispositif de commande d'un appareil d'éclairage, qui comporte un clavier à cinq touches dont une touche marche/arrêt, et quatre touches de niveau qui représentent chacune un niveau d'éclairage préréglé dudit appareil d'éclairage. Un tel clavier est relié à une unité centrale de traitement pour :

- lorsque l'appareil est arrêté, et que la touche marche/arrêt est actionnée, faire prendre à l'appareil le niveau courant d'éclairage qu'il avait avant qu'il soit arrêté,
- lorsque l'appareil est à l'arrêt et qu'une des quatre touches de niveau est actionnée, faire prendre progressivement à l'appareil tous les niveaux intermédiaires d'éclairage depuis le niveau éteint jusqu'au niveau cible d'éclairage préréglé, sélectionné par l'actionnement de ladite touche,
- lorsque l'appareil est en fonctionnement et qu'une des quatre touches de niveau est actionnée, faire prendre progressivement à l'appareil tous les niveaux d'éclairage intermédiaires à partir de son niveau courant jusqu'au niveau cible d'éclairage préréglé, sélectionné par l'actionnement de ladite touche de niveau, et
- lorsque l'appareil est en fonctionnement et que la touche marche/arrêt est actionnée, arrêter ledit appareil.

Outre le fait que le dispositif de commande précité est très complexe, il oblige l'appareil à passer par des niveaux intermédiaires avant d'atteindre le niveau cible sélectionné par l'utilisateur.

Cela est également le cas pour le variateur de lumière classique à potentiomètre, décrit précédemment.

Par rapport à l'état de la technique précité, la présente invention propose un nouveau dispositif de commande d'un appareil adapté à prendre un niveau sélectionné parmi une plage de niveaux, qui permet à l'appareil d'accéder directement au niveau sélectionné par l'utilisateur à partir du clavier, sans passer par des niveaux intermédiaires, et qui assure une plus grande sécurité d'utilisation en découplant la commande d'arrêt de l'appareil des autres commandes.

Plus particulièrement, le dispositif de commande selon l'invention comporte un clavier représentatif de ladite plage de niveaux pour permettre à un utilisateur de sélectionner un niveau, et en outre :

- une touche d'arrêt dudit appareil, et
- une unité de traitement reliée audit clavier et à ladite touche d'arrêt pour :

  - dans le cas où l'appareil est à l'arrêt et ledit clavier est actionné pour sélectionner un niveau cible, faire prendre à l'appareil le niveau cible sélectionné,
  - dans le cas où l'appareil est à l'arrêt et la touche d'arrêt est actionnée, maintenir l'appareil à l'arrêt,
  - dans le cas où ledit appareil est en fonctionnement et ledit clavier est actionné pour sélectionner un niveau cible, faire prendre à l'appareil le niveau cible sélectionné s'il est différent de son niveau courant, et
  - dans le cas où l'appareil est en fonctionnement et que la touche d'arrêt est actionnée, arrêter ledit appareil.

Ainsi, selon l'invention, la touche d'arrêt du dispositif de commande ne permet pas de le mettre en marche, comme cela est prévu classiquement dans les dispositifs de commande déjà connus de l'état de la technique.

Préférentiellement, selon l'invention, l'unité de traitement comprend des moyens pour surveiller de manière distincte l'actionnement du clavier et l'actionnement de la touche d'arrêt.

D'autres caractéristiques avantageuses et non limitatives du dispositif selon l'invention sont les suivantes.

Le dispositif comprend des moyens de visualisation du niveau courant de l'appareil, reliés à ladite unité de traitement.

Ladite unité de traitement est apte à maintenir lesdits moyens de visualisation actifs après l'arrêt de l'appareil pour visualiser le niveau courant qu'avait ledit appareil avant son arrêt.

Ainsi, lorsque l'appareil est à l'arrêt, les moyens de visualisation fournissent à l'utilisateur une indication du niveau courant de l'appareil avant qu'il ait été arrêté, et l'utilisateur peut, s'il le souhaite, en actionnant le clavier, mettre en marche l'appareil au niveau courant correspondant, ou à un autre niveau cible qu'il a sélectionné.

Ladite unité de traitement est apte à mettre en état de veille lesdits moyens de visualisation après l'arrêt de l'appareil.

La mise en état de veille desdits moyens de visualisation consiste par exemple à réduire l'intensité lumineuse desdits moyens de visualisation.

Le dispositif comprend des moyens de visualisation du changement de niveau de l'appareil.

Les moyens de visualisation comprennent au moins une rangée de diodes électroluminescentes positionnée en regard dudit clavier.

Les moyens de visualisation comprennent au moins une rangée de bargraphes.

Avantageusement, le dispositif selon l'invention comprend des moyens de balisage du clavier. Ces moyens de balisage peuvent être volontairement mis en état de veille, en second plan, par rapport à la visualisation du niveau courant ou du niveau cible de l'appareil.

Selon un mode de réalisation du dispositif de commande conforme à l'invention, le clavier comprend au moins une région tactile pourvue de moyens de reconnaissance d'une zone d'appui d'un doigt sur ladite région tactile correspondant à la sélection d'un niveau cible à prendre par l'appareil, lesdits moyens de reconnaissance étant reliés à l'unité de traitement qui est apte, à partir de la reconnaissance de ladite zone d'appui, à déterminer et à transmettre audit appareil la consigne d'appareil pour qu'il prenne le niveau cible sélectionné.

La région tactile comprend trois sous régions dont :

- une région haute représentative d'un niveau limite haut à prendre par l'appareil,
- une région basse représentative d'un niveau limite bas à prendre par l'appareil, et
- une région intermédiaire comprise entre les régions haute et basse, représentative d'une plage de niveaux intermédiaires à prendre par l'appareil, comprise entre les niveaux limites haut et bas.

Lesdits moyens de reconnaissance de ladite région tactile sont du type résistif.

Lesdits moyens de reconnaissance comprennent préférentiellement un circuit ouvert dont les bornes sont reliées à ladite unité de traitement, et formé de deux parties en forme de peigne, dont les dos résistifs sont sensiblement parallèles et les dents conductrices sont enchevêtrées, ladite région tactile étant agencée de sorte que l'appui d'un doigt sur une zone de la région tactile provoque la fermeture dudit circuit par la mise en contact d'au moins une dent d'une partie avec au moins une dent de l'autre partie, ladite unité de traitement comprenant, d'une part, des moyens de lecture de la valeur de résistance existant entre les bornes dudit circuit fermé, cette valeur de résistance étant représentative de ladite zone d'appui, et, d'autre part, des moyens de détermination, à partir de ladite valeur de résistance lue, d'une consigne d'appareil à transmettre audit appareil pour que ce dernier prenne le niveau cible sélectionné correspondant.

Selon un autre mode de réalisation du dispositif de commande conforme à l'invention, le clavier comprend un bouton déplaçable commandant une résistance variable, le déplacement du bouton correspondant à la sélection d'un niveau cible à prendre à l'appareil, et une touche de mise en marche reliée à l'unité de traitement et intégrée au bouton déplaçable, ladite unité de traitement comportant, d'une part, des moyens de lecture de la valeur de résistance de la résistance variable, lors de l'actionnement de ladite touche de mise en marche, ladite valeur de résistance étant représentative de la position dudit bouton, et, d'autre part, des moyens de détermination, à partir de ladite valeur de résistance lue, d'une consigne d'appareil à transmettre audit appareil pour que ce dernier prenne le niveau cible sélectionné correspondant.

L'unité de traitement comprend des moyens de détermination, à partir de ladite valeur de résistance lue, d'une consigne de visualisation, et des moyens de transmission de cette consigne de visualisation auxdits moyens de visualisation pour visualiser le niveau cible sélectionné correspondant pris par ledit appareil.

Il peut être prévu dans le dispositif de commande, selon l'invention, une installation externe reliée à ladite unité de traitement, cette installation externe étant apte à fournir une consigne de sélection d'un niveau cible dans ladite plage de niveaux à l'unité de traitement qui est apte à transmettre cette consigne audit appareil pour lui faire prendre le niveau cible sélectionné s'il est différent de son niveau courant.

Dans ce cas, l'unité de traitement comprend des moyens de gestion des priorités entre les informations qu'elle reçoit du clavier actionné et de l'installation externe, pour que l'information provenant de l'actionnement du clavier soit prioritaire sur l'information provenant de ladite installation externe.

L'installation externe peut être une centrale météorologique, un détecteur de présence d'une personne, ou encore un thermostat.

L'appareil à commander par le dispositif de commande selon l'invention peut être un appareil d'éclairage, et les niveaux à prendre par celui-ci sont des niveaux d'intensité lumineuse variant entre un niveau limite inférieur correspondant à une intensité minimale et un niveau limite supérieur correspondant à une intensité maximale, ladite unité de traitement étant apte, à partir de l'actionnement du clavier, à déterminer et à transmettre à l'appareil d'éclairage une proportion d'intensité lumineuse.

Dans le cas typique, l'unité de traitement est apte à donner à l'appareil d'éclairage un accès direct au niveau d'intensité lumineuse sélectionné à partir du clavier.

L'appareil à commander par le dispositif de commande selon l'invention peut être un volet roulant, et les niveaux à prendre par celui-ci sont des positions du volet variant entre des niveaux limites haut et bas correspondant à des fins de courses haute et basse du volet, l'unité de traitement étant apte, à partir de l'actionnement du clavier, à déterminer et à transmettre au volet un ordre de montée ou de descente pendant un temps donné de sorte que ledit volet atteigne la position sélectionnée.

La détermination du temps de montée ou de descente du volet est réalisée par l'unité de traitement à partir d'une opération d'initialisation au cours de laquelle l'unité de traitement fait faire au volet un trajet entre les fins de courses haute et basse, mesure le temps que met le volet à parcourir ledit trajet, et mémorise le temps mesuré.

L'unité de traitement comprend en outre avantageusement des moyens pour, d'une part, mémoriser le niveau courant de l'appareil, c'est-à-dire la position courante du volet, et, d'autre part, lorsqu'un niveau cible est sélectionné par actionnement du clavier, c'est à dire une position cible du volet, déterminer et transmettre audit volet l'ordre de montée ou de descente pendant un temps donné pour qu'il atteigne, à partir de sa position courante, la position cible sélectionnée.

On entend par position courante du volet, soit le temps de déplacement du volet entre sa position courante effective et l'une des positions de fin de course haute et basse, soit la valeur de résistance du clavier correspondant à cette position courante.

Préférentiellement, l'unité de traitement comprend des moyens pour amener directement le volet en fin de course haute respectivement basse lorsqu'un niveau cible est sélectionné par actionnement du clavier au-dessus respectivement en dessous d'un seuil haut respectivement bas déterminé.

L'unité de traitement peut comprendre également des moyens pour réaliser une opération de mise à jour du temps de déplacement du volet pour une course entière, lorsque le volet arrive en fin de course haute respectivement basse alors que le temps de montée respectivement de descente déterminé par ladite unité de traitement n'est pas encore totalement écoulé.

Selon l'invention, le procédé de commande d'un volet roulant positionné dans une position courante pour l'amener dans une position cible, à l'aide d'un dispositif de commande tel que défini précédemment, comprend, à partir de l'actionnement du clavier, les étapes suivantes :

  a) déterminer la position cible sélectionnée par actionnement du clavier,
  b) déterminer le temps de déplacement du volet entre sa position courante et la position cible,
  c) déterminer le sens de déplacement, montée ou descente, du volet pour qu'il atteigne la position cible sélectionnée à partir de sa position courante,
  d) faire monter ou descendre le volet, pendant le temps déterminé à l'étape b) de sorte que le volet atteigne la position cible,
  e) mémoriser la position cible en position courante du volet.

Ce procédé comprend une opération d'initialisation effectuée lors de la mise sous tension du dispositif de commande, qui comprend les étapes consistant à :

  1) amener le volet jusqu'à une fin de course,
  2) lancer un chronomètre,
  3) amener le volet jusqu'à la fin de course opposée,
  4) arrêter le chronomètre et lire la valeur du temps compté par le chronomètre, et
  5) mémoriser ladite valeur du temps compté par le chronomètre comme étant le temps de déplacement du volet pour une course entière.

Selon un mode de réalisation préférentiel du procédé précité, lors de l'opération d'initialisation, à l'étape 1) on fait descendre le volet jusqu'en fin de course basse, à l'étape 3) on fait monter le volet jusqu'en fin de course haute, et à l'étape 5) le temps de déplacement du volet pour une course entière est un temps de montée.

Lors de l'opération d'initialisation du procédé conforme à l'invention, on initialise également une consigne de visualisation de sorte que l'on visualise la fin de course haute du volet.

Selon le procédé conforme à l'invention, lorsque la position cible sélectionnée par actionnement du clavier est supérieure ou égale, respectivement inférieure ou égale, à un seuil haut, respectivement bas, on amène directement le volet en fin de course haute respectivement basse.

Avantageusement, dans le procédé selon l'invention, lorsqu'à l'étape d) le volet atteint une fin de course haute ou basse alors que le temps déterminé à l'étape b) n'est pas encore totalement écoulé, on réalise une opération de mise à jour du temps de déplacement du volet pour une course entière.

Selon un mode de réalisation préférentiel du procédé conforme à l'invention, à l'étape a) on lit une valeur de résistance existant aux bornes d'un circuit résistif du clavier, et à l'étape b) on détermine le temps de déplacement du volet en fonction du temps de déplacement du volet pour une course entière, de la différence des valeurs de résistance correspondant à la position courante et à la position cible et de la différence des valeurs de résistance correspondant aux fins de courses haute et basse.

A partir de l'opération d'initialisation, dans le procédé selon l'invention, on visualise par allumage successif de diodes électroluminescentes le déplacement du volet entre sa position courante et la position cible.

Entre deux actionnements du clavier, selon l'invention, on visualise la position courante du volet.

Lors de l'actionnement du clavier, on visualise la position cible, simultanément au déplacement du volet.

En outre, le volet peut être arrêté à tout moment par actionnement de la touche d'arrêt.

L'invention concerne également un module utilisateur pour un dispositif de commande d'un appareil tel que défini précédemment, qui comprend :

- une région tactile allongée constituant le clavier de commande du dispositif de commande,
- une touche d'arrêt placée à proximité d'une extrémité de la région tactile, et
- des moyens de visualisation du niveau courant et du niveau cible de l'appareil s'étendant en ligne le long d'au moins un côté longitudinal de ladite région tactile.

Selon d'autres caractéristiques avantageuses et non limitatives de ce module:

- lesdits moyens de visualisation s'étendent à partir de la touche d'arrêt jusqu'à l'extrémité opposée de la région tactile,
- les moyens de visualisation s'étendent le long des deux côtés longitudinaux de ladite région tactile,
- les moyens de visualisation comprennent au moins une rangée de diodes espacées régulièrement le long de ladite région tactile,
- ladite région tactile est subdivisée en trois sous régions :

  - une région haute représentative du niveau limite haut à prendre par l'appareil,
  - une région basse représentative du niveau limite bas à prendre par l'appareil, et
  - une région intermédiaire comprise entre les régions haute et basse, représentative d'une plage de niveaux intermédiaires à prendre par l'appareil, comprise entre les niveaux limites haut et bas,

- la région tactile est pourvue de moyens de reconnaissance d'une zone d'appui d'un doigt sur ladite région tactile correspondant à la sélection d'un niveau cible à prendre par l'appareil, lesdits moyens de reconnaissance étant reliés à l'unité de traitement qui est apte, à partir de la reconnaissance de ladite zone d'appui, à déterminer et à transmettre audit appareil la consigne d'appareil pour qu'il prenne le niveau cible sélectionné,
- lesdits moyens de reconnaissance de ladite région tactile sont du type résistif,
- lesdits moyens de reconnaissance comprennent un circuit ouvert dont les bornes sont reliées à ladite unité de traitement, et formé de deux parties en forme de peigne, dont les dos résistifs sont sensiblement parallèles et les dents conductrices sont enchevêtrées, ladite région tactile étant agencée de sorte que l'appui d'un doigt sur une zone de la région tactile provoque la fermeture dudit circuit par la mise en contact d'au moins une dent d'une partie avec au moins une dent de l'autre partie, ladite unité de traitement comprenant, d'une part, des moyens de lecture de la valeur de résistance existant entre les bornes dudit circuit fermé, cette valeur de résistance étant représentative de ladite zone d'appui, et, d'autre part, des moyens de détermination, à partir de ladite valeur de résistance lue, d'une consigne d'appareil à transmettre audit appareil pour que ce dernier prenne le niveau cible sélectionné correspondant,
- ladite région tactile est pourvue de pistes conductrices de courant sensiblement parallèles, s'étendant généralement transversalement aux dents enchevêtrées des deux parties dudit circuit, au-dessus de celles-ci, lesdites pistes conductrices étant destinées, lors de l'appui d'un doigt sur la région tactile, à venir au contact d'au moins une dent de chacune des parties dudit circuit pour le fermer au niveau de ladite zone d'appui,
- la région tactile porte, à une extrémité respectivement à l'autre extrémité opposée, une indication pour l'utilisateur du niveau limite haut respectivement bas pouvant être pris par l'appareil, et
- la touche d'arrêt est positionnée à proximité de l'extrémité de la région tactile portant l'indication du niveau limite bas pouvant être pris par l'appareil.

La description qui va suivre en regard des dessins annexés, donnés à titre d'exemples non limitatifs, fera bien comprendre en quoi consiste l'invention et comment elle peut être réalisée.

Sur les dessins annexés :

- la figure 1 est un schéma bloc représentatif des principaux éléments du dispositif de commande selon l'invention reliés à un appareil ;
- la figure 2 est un schéma d'un mode de réalisation du clavier du dispositif de commande de la figure 1 ;
- la figure 3 est un schéma d'un mode de réalisation de la touche d'arrêt du dispositif de la figure 1 ;
- la figure 4 est un schéma d'un mode de réalisation des moyens de visualisation du dispositif de la figure 1 ;
- la figure 5 est un schéma bloc représentatif des principaux éléments de l'unité de traitement du dispositif de la figure 1 ;
- la figure 6 est l'organigramme d'un programme de fonctionnement du dispositif de commande de la figure 1 ;
- la figure 7 explicite l'opération d'initialisation du programme de fonctionnement représenté sur la figure 6, pour un dispositif de commande d'un appareil d'éclairage ;
- la figure 8 explicite les sous-étapes de l'étape de détermination de la consigne d'appareil et de la consigne de visualisation du programme de fonctionnement représenté à la figure 6, pour un dispositif de commande d'un appareil d'éclairage ;
- les figures 9 et 10 sont des courbes représentatives de la variation de la consigne d'appareil et de la consigne de visualisation en fonction de la valeur de résistance lue par l'unité de traitement du dispositif de commande, utilisées pour la mise en oeuvre de l'étape représentée sur la figure 8 ;
- la figure 11 est une courbe représentative de la position d'un volet roulant en fonction du temps, commandé par un dispositif de commande du type de celui représenté sur la figure 1 ;
- la figure 12 explicite les différentes étapes de l'opération d'initialisation du programme de fonctionnement représenté sur la figure 6, pour un dispositif de commande d'un volet roulant ;
- la figure 13 explicite les différentes sous-étapes de l'étape de détermination de la consigne d'appareil et de la consigne de visualisation du programme de fonctionnement représenté sur la figure 6, pour un dispositif de commande d'un volet roulant ;
- la figure 14 explicite les différentes sous-étapes de l'étape de détermination du niveau cible constituant une sous-étape de l'étape représentée sur la figure 13 ;
- la figure 15 représente les différentes sous-étapes de l'étape de commande de l'appareil et de la visualisation constituant une sous-étape de l'étape représentée sur la figure 13 ;
- les figures 16 et 17 représentent des vues de face de deux modes de réalisation du module utilisateur selon l'invention ;
- les figures 18 et 19 sont des vues en coupe selon les plans A-A et B-B du module utilisateur représenté sur la figure 16 ;
- la figure 20 représente une vue en coupe selon le plan C-C du module utilisateur représenté sur la figure 17 ;
- la figure 21 est une vue de face d'un autre mode de réalisation du module utilisateur selon l'invention ; et
- la figure 22 représente la variation de la consigne de visualisation en fonction de la valeur de la résistance lue par l'unité de traitement d'un dispositif de commande selon l'invention d'un volet roulant.

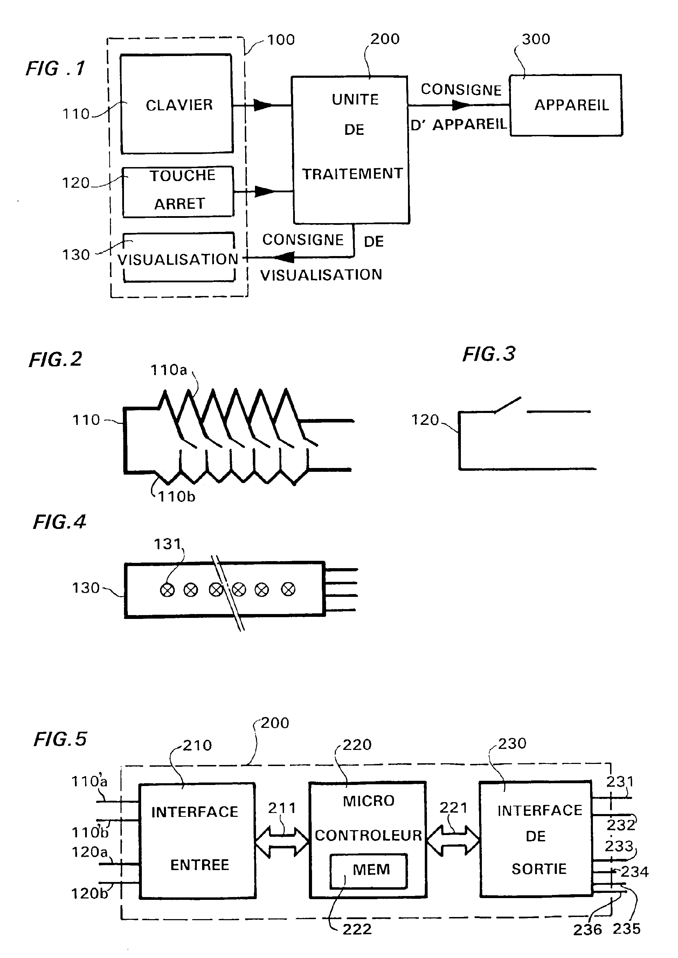

Sur la figure 1, on a représenté un schéma bloc d'un dispositif de commande d'un appareil 300 adapté à prendre un niveau sélectionné parmi une plage de niveaux prédéterminée.

Ce dispositif de commande comporte un clavier 110 représentatif de ladite plage de niveau pour permettre à un utilisateur de sélectionner un niveau, une touche d'arrêt 120 dudit appareil 300 et un unité de traitement 200 reliée en entrée au clavier 110 et à la touche d'arrêt 120, et en sortie à l'appareil 300 pour :

- dans le cas où l'appareil 300 est à l'arrêt et le clavier 110 est actionné pour sélectionner un niveau cible, faire prendre à l'appareil le niveau cible sélectionné,
- dans le cas où l'appareil 300 est à l'arrêt et la touche d'arrêt 120 est actionnée, maintenir l'appareil à l'arrêt,
- dans le cas où l'appareil 300 est en fonctionnement et ledit clavier 110 est actionné pour sélectionner un niveau cible, faire prendre à l'appareil le niveau cible sélectionné s'il est différent de son niveau courant, et
- dans le cas où l'appareil 300 est en fonctionnement et que la touche d'arrêt 120 est actionnée, arrêter ledit appareil.

En outre, le dispositif de commande comprend ici des moyens de visualisation 130 du niveau courant de l'appareil 300, reliés à ladite unité de traitement 200.

Le clavier 110 est du type résistif (voir figure 2).

La touche d'arrêt 120 comprend un interrupteur (voir schéma électrique de la figure 3).

Les moyens de visualisation 130 comprennent ici au moins une rangée de diodes électroluminescentes 131 (voir figure 4).

Selon un mode de réalisation préférentiel du dispositif de commande représenté sur la figure 1, le clavier 110, la touche d'arrêt 120 et les moyens de visualisation 130 font partie intégrante d'un module utilisateur 100.

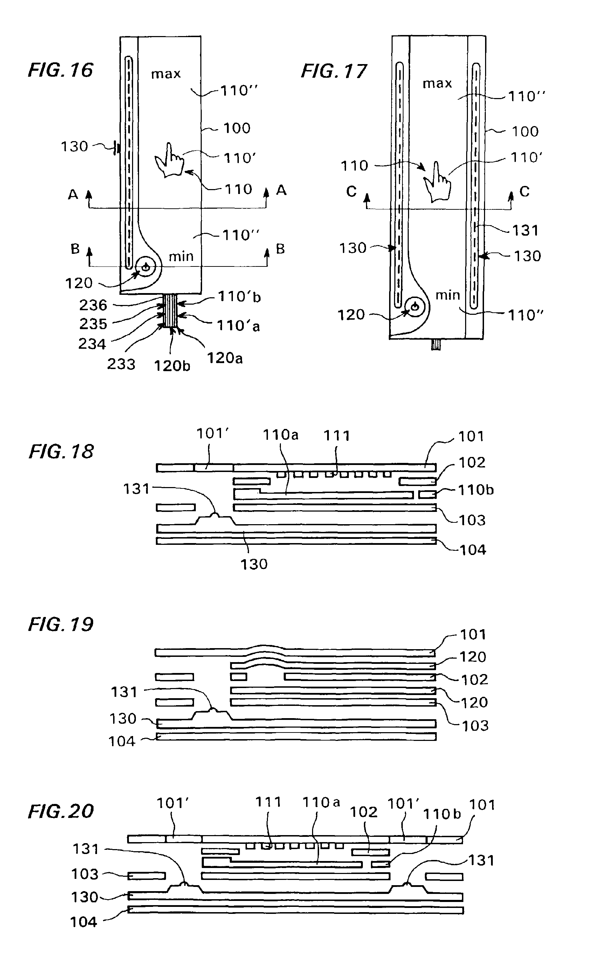

Trois modes de réalisation préférentiels du module utilisateur 100 sont représentés sur les figures 16 à 21.

Comme on peut le voir sur ces figures 16 à 21, le module utilisateur 100 comprend une région tactile 110 allongée constituant le clavier de commande du dispositif de commande, une touche d'arrêt 120 placée à proximité d'une extrémité de ladite région tactile 110, et des moyens de visualisation 130 du niveau courant de l'appareil qui s'étendent en ligne le long d'au moins un côté longitudinal de ladite région tactile 110.

Selon le premier mode de réalisation représenté sur la figure 16, les moyens de visualisation 130 s'étendent le long d'un côté longitudinal de ladite région tactile 110.

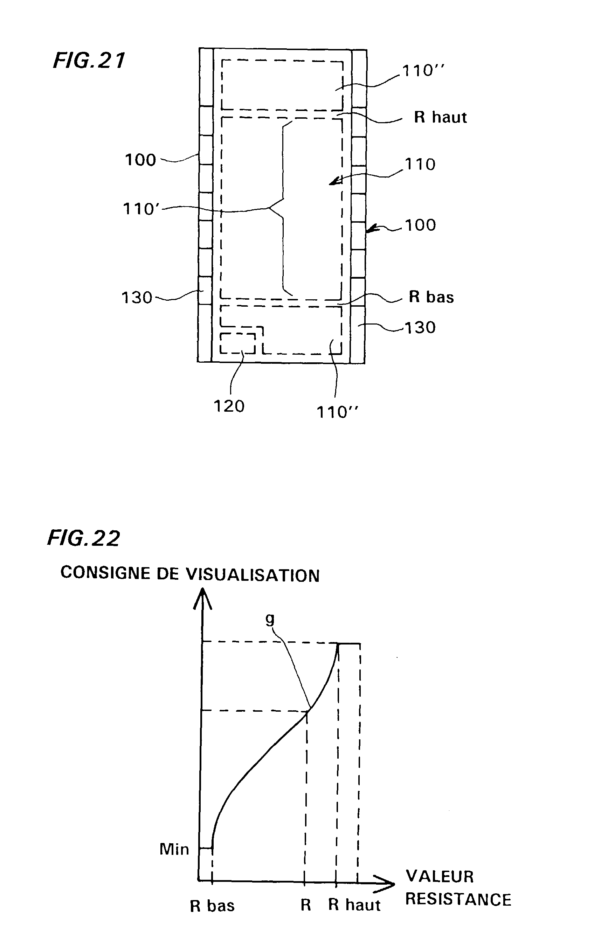

Selon le deuxième et le troisième modes de réalisation représentés respectivement sur les figures 17 et 21, les moyens de visualisation 130 s'étendent le long des deux côtés longitudinaux de ladite région tactile 110. Ces modes de réalisation permettent une utilisation plus conviviale du module utilisateur par un gaucher qui, lors de l'actionnement du clavier, pourrait avec sa main masquer une partie des moyens de visualisation 130 situés du côté gauche de la région tactile 110 (comme cela est prévu sur la figure 16).

Comme on peut le voir sur les figures 16, 17 et 21, les moyens de visualisation 130 s'étendent à partir de la touche d'arrêt 120 jusqu'à l'extrémité opposée de la région tactile 110.

Ici, les moyens de visualisation comprennent une rangée de diodes 131 positionnée d'un côté ou des deux côtés longitudinaux de la région tactile, et espacées régulièrement le long de ladite région tactile.

On peut prévoir, dans une variante de réalisation non représentée, que les moyens de visualisation 130 comprennent au moins une rangée de bargraphes.

Le module utilisateur 100 comporte, comme le montrent les vues en coupe représentées sur les figures 18 à 20, une face de décor 101 constituée par exemple par une membrane en matériau plastique souple qui recouvre un matériau en sandwich comprenant des circuits imprimés et des entretoises en matériau isolant.

La face de décor 101 comporte, au niveau du positionnement des moyens de visualisation, des fenêtres 101' laissant passer la lumière produite par les diodes 131 placées en dessous de ladite face de décor. Cette face de décor 101 porte, à une extrémité et à l'autre extrémité opposées de ladite région tactile 110, une indication pour l'utilisateur du niveau limite haut respectivement bas pouvant être pris par l'appareil.

A ce sujet, selon le mode de réalisation du module utilisateur 100 représenté sur la figure 21, il est prévu que la région tactile 110 constituant le clavier est subdivisée en trois sous régions :

- une région haute 110" représentative du niveau limite haut à prendre par l'appareil, située au-dessus d'une valeur seuil R haut,
- une région basse 110" représentative du niveau limite bas à prendre par l'appareil, située en dessous d'une valeur seuil R bas, et
- une région intermédiaire 110' comprise entre les valeurs seuils R haut et R bas représentative d'une plage de niveaux intermédiaires à prendre par l'appareil, comprise entre les niveaux limites haut et bas.

Selon le mode de réalisation représenté sur la figure 21, il est prévu, ici, pour plus de simplification, une diode électroluminescente positionnée de part et d'autre de chacune des régions haute et basse de ladite région tactile 110.

Selon les modes de réalisation représentés sur les figures 16, 17 et 21, il est prévu sur un côté de la région tactile 110 seize diodes électroluminescentes 131 qui permettent de visualiser seize niveaux différents à prendre par l'appareil.

Par ailleurs, la région tactile 110 est pourvue de moyens de reconnaissance d'une zone d'appui d'un doigt sur ladite région tactile correspondant à la sélection d'un niveau cible à prendre par l'appareil, lesdits moyens de reconnaissance étant reliés à l'unité de traitement par des moyens de liaison 110'a, 110'b, ladite unité de traitement étant apte, à partir de la reconnaissance de ladite zone d'appui, à déterminer et à transmettre audit appareil une consigne d'appareil pour qu'il prenne le niveau cible sélectionné.

Plus particulièrement, les moyens de reconnaissance de ladite région tactile sont du type résistif.

Ils comprennent ici un circuit ouvert (voir plus particulièrement la figure 2), dont les bornes sont reliées à ladite unité de traitement, et formé de deux parties 110a, 110b en forme de peigne, dont les dos résistifs sont sensiblement parallèles et les dents conductrices sont enchevêtrées.

Ces parties 110a, 110b sont constituées ici par des pistes d'un circuit imprimé compris entre une entretoise inférieure 103 constituée par une membrane en matériau isolant et formant support du circuit imprimé et une entretoise supérieure 102 également en matériau isolant placée entre le circuit imprimé et la face de décor 101.

Les dos résistifs des parties en forme de peigne sont constitués par des pistes en matière carbonée parallèles et les dents conductrices enchevêtrées sont constituées par des pistes en matière métallique.

Le pas entre chaque dent conductrice des parties de circuit est ici de l'ordre de 1 mm.

La région tactile 110 est agencée de sorte que l'appui d'un doigt sur la zone tactile provoque la fermeture du circuit résistif 110a, 110b par la mise en contact d'au moins une dent d'une partie 110a avec une dent de l'autre partie 110b.

L'unité de traitement 200, comme cela sera explicité plus en détail ultérieurement, comprend, d'une part, des moyens de lecture 210 de la valeur de résistance existant entre les bornes du circuit fermé, cette valeur de résistance étant représentative de ladite zone d'appui, et, d'autre part, des moyens de détermination 220, à partir de ladite valeur de résistance lue, d'une consigne d'appareil à transmettre audit appareil pour que ce dernier prenne le niveau cible sélectionné correspondant.

La valeur de résistance lue est comprise entre une valeur minimale de l'ordre de 100 Ω à 200 Ω et une valeur maximale supérieure ou égale à 10 kΩ.

Comme cela sera également décrit ultérieurement, l'unité de traitement comprend également des moyens de détermination, à partir de la valeur de résistance lue, d'une consigne de visualisation à transmettre aux moyens de visualisation pour visualiser le niveau cible sélectionné correspondant pris par l'appareil.

Pour fermer le circuit de résistance 110a, 110b lors de l'appui d'un doigt sur une zone de la région tactile, ladite région tactile 110 est pourvue de pistes en matière métallique, conductrices de courant 111 sensiblement parallèles, positionnées sur la face intérieure de la face de décor 101 du module utilisateur, de sorte qu'elles s'étendent généralement transversalement aux dents conductrices enchevêtrées des deux parties 110a, 110b du circuit, au-dessus de celles-ci, lesdits pistes conductrices étant destinées, lors de l'appui d'un doigt sur la région tactile, à venir au contact d'au moins une dent de chacune des parties du circuit pour le fermer au niveau de ladite zone d'appui.

La touche d'arrêt 120 est positionnée dans le module utilisateur 100 à proximité de l'extrémité de la région tactile 110 portant l'indication du niveau limite bas pouvant être pris par l'appareil.

Les diodes 131 des moyens de visualisation 130 sont positionnées de manière à être en contact électrique avec un circuit s'étendant entre l'entretoise 103 servant de support au circuit résistif 110 et un support inférieur 104 formant la face inférieure du module utilisateur et réalisé en matériau isolant, le circuit imprimé supportant les diodes permettant de faire la liaison électrique avec l'unité de traitement 200.

Par ailleurs, la touche d'arrêt 120 comprend un interrupteur (voir le schéma électrique de la figure 3) constitué par deux pistes conductrices de courant 120, une piste supérieure positionnée juste en dessous de la face de décor 101 et une piste inférieure, espacées entre elles au moyen de l'entretoise isolante 102. La piste supérieure 120 comporte une partie bombée déformable sous l'action d'un doigt en appui sur la face de décor 101 du module utilisateur, pour venir au contact de la piste inférieure 120 et fermer l'interrupteur relié par deux liaisons 120a, 120b à l'unité de traitement. Lors de la fermeture de l'interrupteur, l'unité de traitement est apte à transmettre à l'appareil une consigne d'arrêt.

La région tactile constituant le clavier est, elle, ici, reliée par deux fils de liaison 110'a, 110'b à l'unité de traitement, et les moyens de visualisation comprennent quatre fils de liaison 233, 234, 235, 236 raccordés à l'unité de traitement commandée par matriçage.

Au sujet de la visualisation du niveau courant de l'appareil 300 commandé par le dispositif de commande décrit, l'unité de traitement comporte des moyens pour que les moyens de visualisation indiquent un changement de niveau de l'appareil. Dans le cas où les moyens de visualisation sont constitués par au moins une rangée de diodes électroluminescentes, cela consiste à allumer et à éteindre successivement les diodes au fur et à mesure que l'appareil change de niveau.

On peut également prévoir que le dispositif de commande comporte des moyens de balisage du clavier, tels que des moyens lumineux mis volontairement en veille par rapport à la visualisation du niveau courant de l'appareil ou de son changement de niveau.

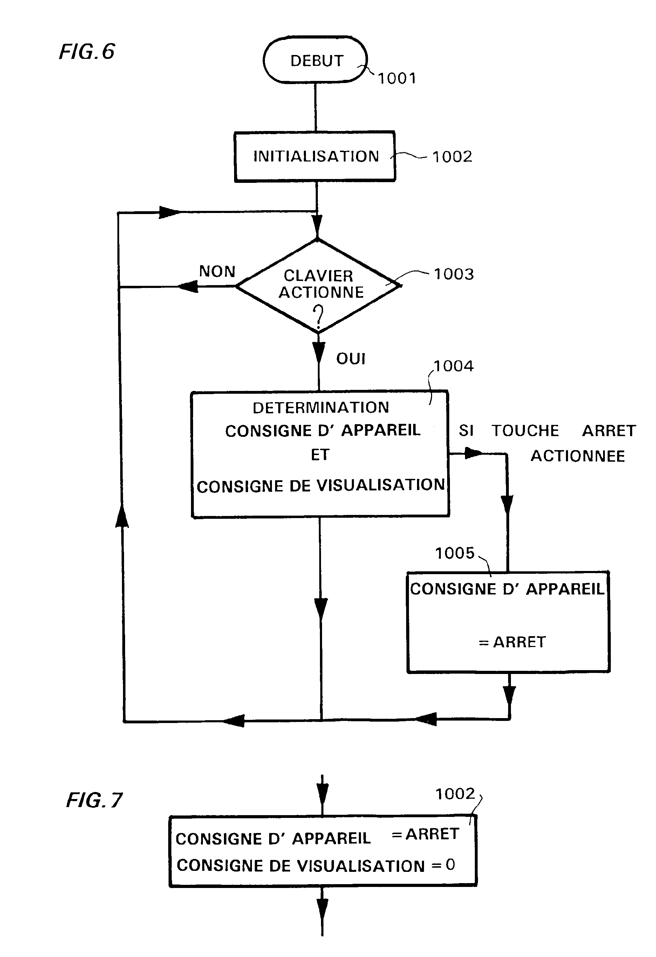

Sur la figure 5, on a représenté selon un schéma bloc, les principaux éléments de l'unité de traitement 200. Elle comprend en entrée une interface d'entrée 210 à laquelle sont reliés le clavier 110 et la touche d'arrêt 120, ici par des moyens de liaison distincts, comme cela a été décrit précédemment, c'est-à-dire par deux fils de liaison 110'a, 110'b pour le clavier 110 et par deux fils de liaison 120a, 120b pour la touche d'arrêt 120.

Ainsi, l'unité de traitement comprend des moyens pour surveiller de manière distincte l'actionnement du clavier et l'actionnement de la touche d'arrêt.

Cela peut être réalisé par tout autre moyen plus complexe que par des liaisons distinctes du clavier et de la touche d'arrêt à l'unité de traitement, par exemple par un système de multiplexage.

L'interface d'entrée 210 comporte notamment un moyen de lecture, tel qu'un ohmmètre, de la résistance existant entre les bornes du circuit résistif fermé constituant les moyens de reconnaissance de la zone d'appui de la région tactile du clavier, un convertisseur analogique/numérique pour convertir le signal analogique lu par les moyens de lecture en un signal numérique, et des moyens de correction et de filtrage de la valeur de résistance lue permettant de choisir une valeur de résistance correcte au cas où le mouvement du doigt de l'utilisateur sur la région tactile 110 n'est pas précis, par exemple lorsque l'utilisateur relâche lentement l'appui de son doigt sur la région tactile en créant des valeurs d'impédance intermédiaires.

Cette interface d'entrée 210 est reliée par un bus 211 à un microcontrôleur 220, par lequel elle va lui transmettre des données numériques.

Le microcontrôleur 220 est lui-même relié par un bus 221 à une interface de sortie 230 reliée d'une part à l'appareil 300 par au moins deux liaisons 231, 232, pour lui fournir une consigne d'appareil déterminée par l'unité de traitement sous le contrôle du microcontrôleur 220, et d'autre part aux moyens de visualisation 130 par quatre fils de liaison 233 à 236 en alimentation matricée, pour fournir aux moyens de liaison une consigne de visualisation déterminée par l'unité de traitement sous le contrôle du microcontrôleur 220.

Sur la figure 6, on a représenté l'organigramme général d'un programme de fonctionnement du dispositif de commande selon l'invention, situé dans la mémoire 222 du microcontrôleur 220.

Préliminairement on notera que, pour plus de simplicité, le programme de fonctionnement du dispositif est décrit et représenté de manière séquentielle, mais il est bien entendu que celui-ci fonctionne en multi-tâches.

Selon l'organigramme représenté, le programme de fonctionnement dudit dispositif de commande comporte, lors de la mise sous tension 1001 de l'appareil 300, une opération d'initialisation 1002, puis une étape de test 1003 au cours de laquelle l'unité de traitement détermine si le clavier est ou non actionné. Il comprend, à la suite de l'étape de test 1003, une étape 1004 de détermination de la consigne d'appareil et de la consigne de visualisation qui est exécutée lorsque le clavier est actionné. La consigne d'appareil déterminée à l'étape 1004 est alors transmise via l'interface de sortie à l'appareil 300, pour que celui-ci prenne le niveau cible sélectionné correspondant, et la consigne de visualisation est également transmise aux moyens de visualisation pour qu'ils visualisent le niveau cible atteint par l'appareil.

Si, au cours de l'étape de détermination de la consigne d'appareil et de la consigne de visualisation 1004, la touche d'arrêt est actionnée par l'utilisateur, il est alors prévu d'exécuter une étape 1005 pour donner à la consigne d'appareil la valeur arrêt.

Le microcontrôleur 220 comporte une zone de la mémoire 222 dans laquelle il mémorise les valeurs déterminées de la consigne d'appareil et de la consigne de visualisation.

Selon un premier mode de réalisation, l'appareil à commander par le dispositif de commande selon l'invention est un appareil d'éclairage, et les niveaux à prendre par celui-ci sont des niveaux d'intensité lumineuse variant entre un niveau limite inférieur correspondant à une intensité nulle et un niveau limite supérieur correspondant à une intensité maximale, ladite unité de traitement 200 étant apte, à partir de l'actionnement du clavier 110, à déterminer et à transmettre à l'appareil d'éclairage 300 une proportion d'intensité lumineuse, en exécutant une tâche de commande consistant à modifier l'angle d'ouverture d'un interrupteur électronique relié audit appareil d'éclairage.

Dans le cas où l'appareil 300 est un appareil d'éclairage, l'opération d'initialisation 1002, plus particulièrement représentée sur la figure 7, consiste à donner à la consigne d'appareil la valeur arrêt, et à la consigne de visualisation une valeur égale à zéro, ce qui correspond au fait que toutes les diodes électroluminescentes sont éteintes. On peut aussi envisager que, lors de l'initialisation, la consigne de visualisation soit telle que les diodes soient mises en état de veille.

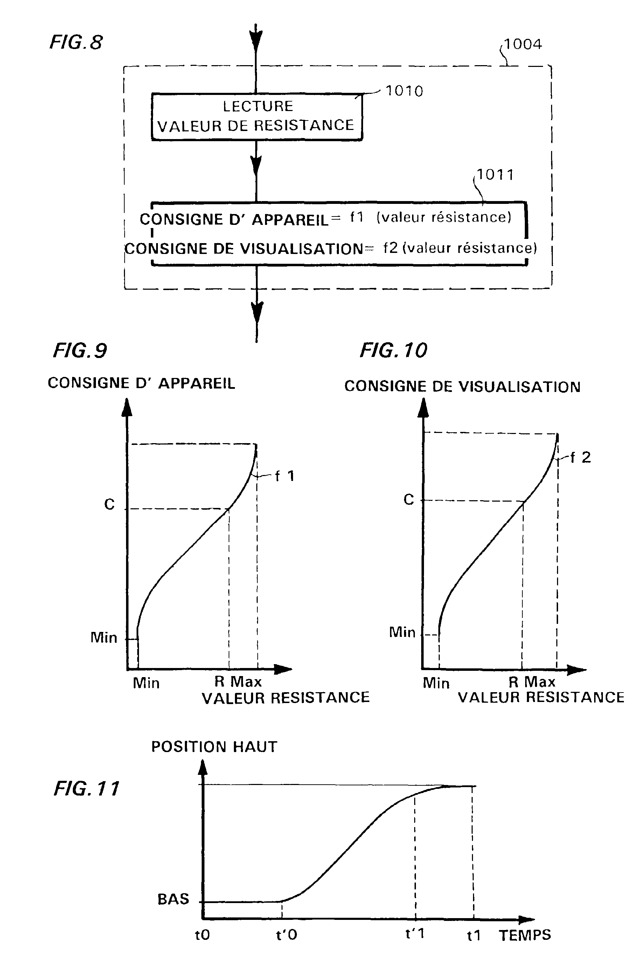

Lorsque le clavier est actionné, il est exécuté l'étape 1004 de détermination de la consigne d'appareil et de la consigne de visualisation, qui, comme le montre la figure 8, comprend une première étape 1010 de lecture de la valeur de résistance existant aux bornes du circuit résistif 110 fermé, cette valeur de résistance étant représentative de la zone d'actionnement du clavier, c'est-à-dire la zone d'appui d'un doigt sur la région tactile du clavier. Avec la valeur de résistance lue à l'étape 1010, on détermine, au cours d'une étape ultérieure 1011, la consigne d'appareil à transmettre à l'appareil, à partir de la fonction f1 représentée sur la figure 9.

Au cours de l'étape 1011, on détermine également la consigne de visualisation qui est fonction de la valeur de résistance lue à l'étape précédente, selon la courbe f2 représentée sur la figure 10.

La consigne de visualisation sera transmise par l'interface de sortie, via les moyens de liaison matricés 233, 236 aux moyens de visualisation de manière à ce que les moyens de visualisation visualisent le niveau cible pris par l'appareil.

Ici, l'unité de traitement 200 est apte à donner à l'appareil d'éclairage un accès direct au niveau d'intensité lumineuse sélectionné à partir du clavier.

A l'issue de l'étape 1011, on mémorise, dans la zone correspondante de la mémoire 222 du microcontrôleur, les valeurs de la consigne d'appareil et de la consigne de visualisation déterminées.

Lorsque la touche d'arrêt est actionnée, selon l'organigramme du programme de fonctionnement représenté sur la figure 6, la consigne d'appareil est mise à la valeur arrêt, et l'appareil est arrêté, la consigne de visualisation peut correspondre soit au maintien à pleine puissance de la diode allumée avant arrêt de l'appareil, soit à la mise en état de veille de la diode allumée avant arrêt de l'appareil, de façon à ce qu'elle constitue une indication pour l'utilisateur du niveau courant de l'appareil avant son arrêt.

Selon un autre mode de réalisation, l'appareil à commander par le dispositif de commande selon l'invention est un volet roulant, et les niveaux à prendre par celui-ci sont des positions du volet variant entre des niveaux limites haut et bas correspondant à des fins de courses haute et basse du volet, l'unité de traitement 200 étant apte, à partir de l'actionnement du clavier 110, à déterminer et à transmettre au volet un ordre de montée ou de descente pendant un temps donné de sorte que ledit volet atteigne la position sélectionnée.

Avantageusement, le dispositif de commande fonctionne en "boucle ouverte", c'est-à-dire sans capteur de position du volet.

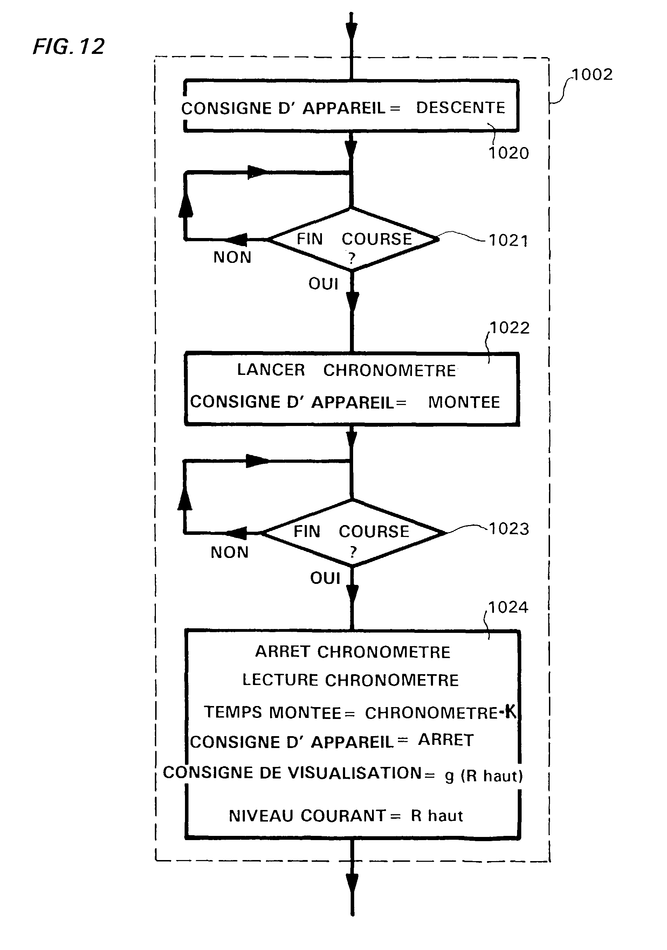

La détermination du temps de montée et de descente du volet est alors réalisée par l'unité de traitement à partir d'une opération d'initialisation 1002 qui va être décrite maintenant en référence à la figure 12.

Au cours de cette opération d'initialisation 1002, on fait descendre le volet roulant jusqu'à ce qu'il arrive en fin de course basse, ce qui correspond à l'exécution des étapes 1020 et 1021. A l'étape 1020 la consigne d'appareil est mise à la valeur "descente". L'étape 1021 est une étape de test de fin de course du volet. Lorsque la fin de course est atteinte, on exécute l'étape 1022 pour lancer un chronomètre et donner à la consigne d'appareil la valeur "montée" de façon à faire monter le volet roulant jusqu'en fin de course haute (étape de test 1023). Lorsque le volet arrive en fin de course haute, ce qui est testé à l'étape 1023, à l'étape 1024 on arrête le chronomètre, on lit le temps compté par le chronomètre et on détermine un temps de montée du volet.

A l'étape 1024 la consigne d'appareil est mise à la valeur "arrêt", la consigne de visualisation est mise à une valeur égale à "g (R haut)" (voir courbe de la figure 22) où R haut est la valeur de la résistance correspondant au niveau limite haut du volet, et le niveau courant de l'appareil est mis à la valeur correspondant au niveau haut, c'est-à-dire ici à la valeur de résistance R égale à R haut.

Le temps de montée est déterminé à l'étape 1024 en fonction de la courbe représentée sur la figure 11. Cette courbe représente le temps effectif de montée du volet entre sa position limite basse (volet fermé) et sa position limite haute (volet ouvert). Comme on peut le voir sur la figure 11, cette courbe comporte une partie intermédiaire sensiblement linéaire et deux parties d'extrémité en palier. Le palier bas de la courbe est compris entre les valeurs de temps t0 et t'0, la valeur t'0 - t0 correspondant au temps de décollage du volet, le moteur d'entraînement du volet étant mis en rotation. Ce temps de décollage correspond à l'enroulement du surplus de longueur du volet avant que celui-ci commence réellement à monter. Le palier haut de la courbe est compris entre les valeurs de temps t'1 et t1, la valeur t1 représentant le temps où le volet est complètement enroulé en position limite haute où le contact fin de course du moteur est ouvert, et la valeur t'1 représentant le temps où le volet arrive en butée haute de la glissière du volet. La valeur t1 - t'1 représente la durée d'enroulement complet du volet serrant les lames du volet autour de l'axe moteur.

En tenant compte de la courbe représentée sur la figure 11, le temps de montée déterminé à l'étape 1024 est égal à la différence entre le temps compté par le chronomètre entre son démarrage à l'étape 1022 et son arrêt à l'étape 1024, et une valeur constante K correspondant à la valeur (t'0 - t0) + (t1 - t'1).

Le temps de montée ainsi déterminé, la consigne d'appareil, la consigne de visualisation et le niveau courant du volet sont mémorisés dans la zone correspondante de la mémoire 222 du microcontrôleur 220.

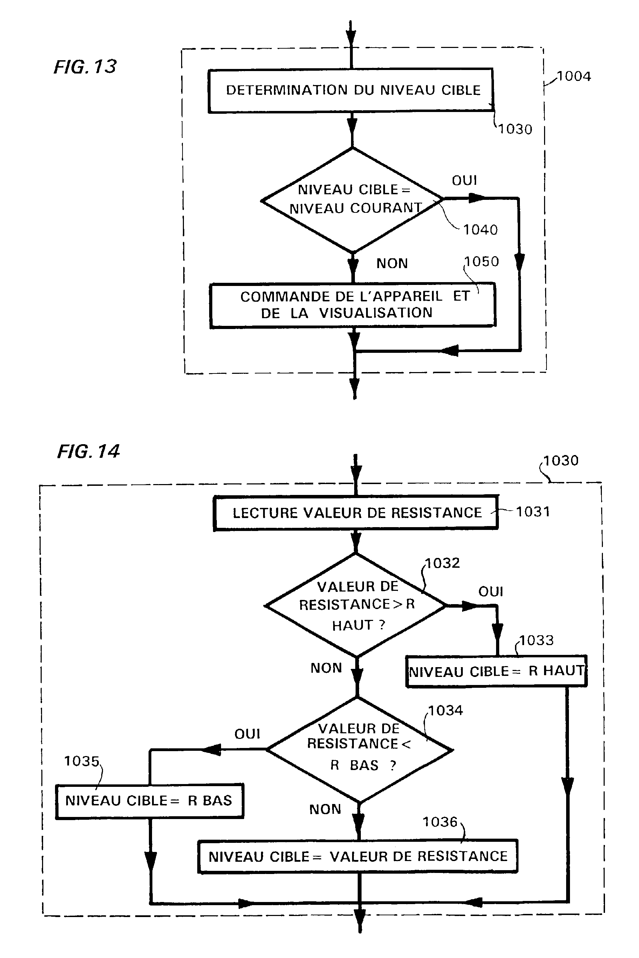

Lorsque le clavier est actionné, on exécute l'étape 1004 de détermination de la consigne d'appareil et de la consigne de visualisation. Comme le montre la figure 13, cette étape 1004 comprend une sous-étape 1030 de détermination du niveau cible, une sous-étape test 1040 de comparaison entre le niveau cible déterminé à la sous-étape 1030 et le niveau courant de l'appareil, et une sous-étape 1050 de détermination de la consigne d'appareil et la détermination de la consigne de visualisation pour commander le volet et la visualisation du mouvement du volet. La sous-étape 1050 n'est exécutée que s'il est déterminé à l'étape 1040 que le niveau cible sélectionné est différent du niveau courant de l'appareil.

L'étape de détermination du niveau cible 1030 va être décrite maintenant en référence à la figure 14.

Pour déterminer le niveau cible à prendre par l'appareil, sélectionné à partir de l'actionnement du clavier, on lit à l'étape 1031 la valeur de résistance de la résistance existant aux bornes du circuit résistif 110 fermé, puis au cours d'une étape de test 1032 on compare cette valeur de résistance lue à la valeur de résistance limite haute R haut correspondant à la position limite haute du volet. Si cette valeur de résistance est supérieure à la valeur R haut, alors à l'étape 1033 on attribue au niveau cible la valeur R haut. Si la valeur de résistance lue est inférieure au niveau R haut, on effectue alors une étape de test 1034 pour comparer cette valeur de résistance lue à la valeur R bas correspondant à la position limite basse du volet. Si la valeur de la résistance lue est inférieure à R bas, alors à l'étape 1035 on attribue au niveau cible la valeur R bas, et si la valeur de résistance lue n'est pas inférieure à R bas, alors à l'étape 1036 on attribue au niveau cible la valeur de résistance lue.

Le niveau cible est une valeur mémorisée dans la zone correspondante de la mémoire 222 du microcontrôleur 220, et mise à jour à chaque actionnement du clavier.

Après la sous-étape 1030, on exécute l'étape test 1040 pour comparer le niveau cible déterminé au niveau courant de l'appareil avant l'actionnement du clavier, et, si ce niveau cible est différent du niveau courant, on exécute la sous-étape 1050 de commande de l'appareil et de la visualisation pour que le volet atteigne la position cible correspondante (voir figure 13).

Bien entendu, si le niveau cible est égal au niveau courant du volet, aucune commande de l'appareil et de la visualisation n'est réalisée, et le volet roulant reste en place avec la visualisation maintenue à ce niveau courant.

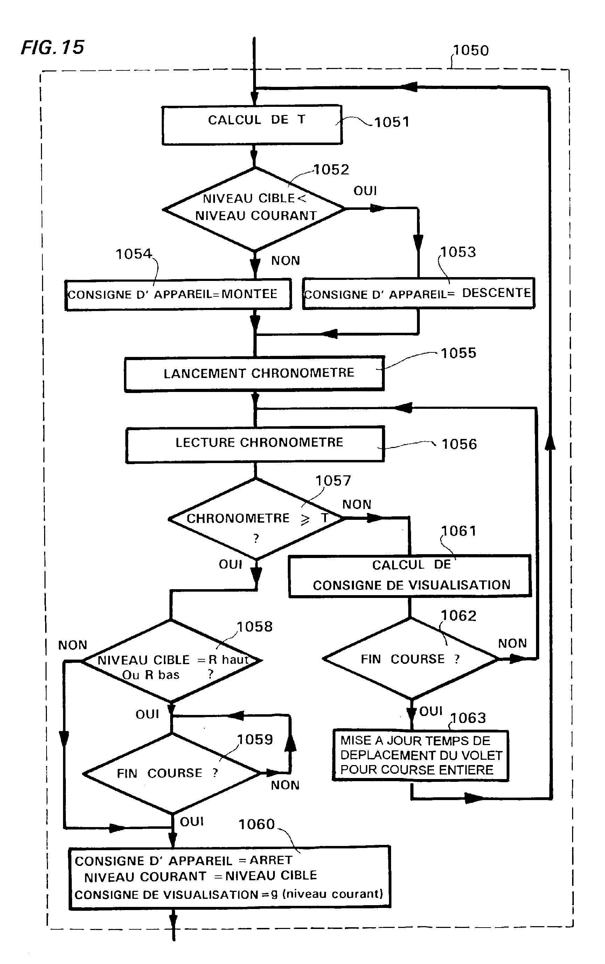

La sous-étape 1050 va maintenant être décrite dans le détail en référence à la figure 15.

Dans une première étape 1051, on détermine le temps de déplacement T du volet entre sa position courante (niveau courant) et la position cible (niveau cible) sélectionnée à partir du clavier.

Ce temps de déplacement T est déterminé selon la formule de calcul suivante :

$$T = (|\text{ niveau cible - niveau courant }| / (R\text{ haut - R bas})) \times (\text{temps de montée})$$

où le temps de montée est déterminé lors de l'opération d'initialisation 1002 comme précédemment décrit, la valeur R haut est la valeur de résistance correspondant à la position limite haute du volet et la valeur R bas est la valeur de résistance correspondant à la position limite basse du volet.

Après avoir déterminé le temps de déplacement T à l'étape 1051, une étape de test 1052 est exécutée pour déterminer si le niveau cible est inférieur ou supérieur au niveau courant et en déduire le sens de déplacement du volet.

Si le niveau cible sélectionné à partir de l'actionnement du clavier est inférieur au niveau courant, alors l'ordre est donné au volet de monter, c'est-à-dire qu'à l'étape 1054 la consigne d'appareil est mise à la valeur "montée" et transmise par l'interface de sortie au volet. Cela revient à faire fonctionner le moteur d'entraînement du volet dans le sens de rotation de la montée. Si le niveau cible est inférieur au niveau courant alors la consigne d'appareil transmise à l'étape 1053 par l'interface de sortie au volet est égale à la valeur "descente", ce qui revient à faire fonctionner le moteur d'entraînement du volet dans le sens de rotation de la descente.

Simultanément, on lance le chronomètre à l'étape 1055 de façon à faire monter ou descendre le volet pendant le temps de déplacement T déterminé à l'étape 1051. Au cours de la descente ou de la montée de l'appareil, on lit le chronomètre lors d'une étape 1056 et on effectue une étape de test 1057 pour comparer la lecture du chronomètre au temps de déplacement T déterminé précédemment.

Si la lecture du chronomètre est inférieure au temps de déplacement T déterminé à l'étape 1051, on met à jour lors d'une étape 1061 la consigne de visualisation selon la formule de calcul suivante :

$$\text{consigne de visualisation} = (\text{chronomètre}/T) \times |g\text{ (niveau cible) - }g\text{ (niveau courant)}|$$

de façon à ce que l'on allume et éteint successivement les diodes nécessaires entre le niveau courant et le niveau cible à atteindre par le volet, pour visualiser la progression du volet entre la position courante et la position cible sélectionnée.

Simultanément, les diodes correspondant à la position cible sont allumées.

La courbe "g" donnant la valeur de la consigne de visualisation en fonction du niveau cible est représentée sur la figure 22.

A la fin de l'étape de test 1057, quand le chronomètre a atteint le temps de déplacement T déterminé à l'étape 1051, lors d'une étape 1060, la consigne d'appareil est mise à la valeur "arrêt" et est transmise à l'appareil de façon à ce que le volet roulant s'arrête. A l'étape 1060, le niveau courant est mis à la valeur du niveau cible et la consigne de visualisation est mise à la valeur de g (niveau courant). L'ensemble de ces valeurs est mémorisé dans la zone correspondante de la mémoire 222 du microcontrôleur 220.

Comme le montre plus particulièrement l'organigramme représenté sur la figure 15, il est prévu une étape test 1058 pour amener directement le volet en position de fin de course haute et respectivement basse, lorsque la position cible sélectionnée par l'actionnement du clavier est supérieure ou égale respectivement inférieure ou égale à un seuil haut R haut, respectivement bas R bas du clavier.

En effet, lors de l'étape de test 1058, on détermine si le niveau cible sélectionné est égal à la valeur R haut ou R bas, et si tel est le cas, on amène directement le volet dans la position respectivement haute ou basse sans tenir compte d'un temps de déplacement du volet, ce qui est réalisé par l'exécution de l'étape de test de fin course 1059.

Il est intéressant de noter dans ce cas, que l'unité de traitement détermine un temps de déplacement théorique du volet entre sa position courante et sa position de fin de course sélectionnée. Elle compare ce temps de déplacement théorique au déplacement réel et, si il n'y a pas concordance, elle réalise alors une étape (non représentée) de mise à jour du temps de déplacement du volet pour une course entière identique à l'étape 1063 décrite ci-après.

Par ailleurs, si au cours de la montée ou de la descente du volet, le volet atteint une position de fin de course haute ou basse alors que le temps de déplacement T déterminé lors de l'étape 1051 n'est pas encore totalement écoulé, on réalise la mise à jour du temps de déplacement du volet pour une course entière. Cela correspond à l'exécution de l'étape de test de fin de course 1062 et de l'étape de mise à jour 1063 si le test de fin de course est positif.

Lorsqu'on arrive dans des positions de fin de course du volet haute ou basse, il se produit alors dans le sous-ensemble moteur, une ouverture de contacts qui ouvre le circuit électrique de liaison le reliant à l'interface de sortie de l'unité de traitement, cette interface de sortie transmettant alors l'information au microcontrôleur pour que celui-ci envoie en retour une consigne d'appareil égale à la valeur "arrêt". Cette ouverture du circuit n'est pas matérialisée sur la figure 5, pour plus de clarté, du fait de son appartenance à l'ensemble moteur.

Ainsi, lorsqu'on sélectionne à partir du clavier une position de fin de course haute ou basse, le dispositif de commande fonctionne en boucle dite "fermée" avec un retour d'information du moteur via l'interface de sortie vers le microcontrôleur.

Le procédé de commande du volet roulant positionné dans une position courante pour l'amener dans une position cible à l'aide du dispositif de commande décrit précédemment comprend, à partir de l'actionnement du clavier par un utilisateur, les étapes suivantes :

a) déterminer la position cible sélectionnée par l'actionnement du clavier,

b) déterminer le temps de déplacement du volet entre sa position courante et la position cible,

c) déterminer le sens de déplacement, montée ou descente, du volet pour qu'il atteigne la position cible sélectionnée à partir de sa position courante,

d) faire monter ou descendre le volet pendant le temps déterminé à l'étape b) de sorte qu'il atteigne la position cible, et mémoriser la position cible en position courante du volet.

Lorsque la position cible sélectionnée par actionnement du clavier est supérieure ou égale respectivement inférieure ou égale à un seuil haut, respectivement bas du clavier, selon le procédé décrit, on amène directement le volet en fin de course haute respectivement basse.

Lorsqu'à l'étape d) le volet atteint une fin de course haute ou basse alors que le temps déterminé à l'étape b) n'est pas encore totalement écoulé, on réalise une opération de mise à jour du temps de déplacement du volet pour une course entière.

Dans une variante non représentée, on pourrait envisager également de réaliser de nouveau une opération d'initialisation identique à celle réalisée lors de la mise sous tension du dispositif de commande.

Le procédé de commande du volet à l'aide du dispositif de commande décrit précédemment fonctionne en boucle dite "ouverte", c'est-à-dire sans capteur de position du volet en déterminant le temps de déplacement du volet entre une position courante et une position cible sélectionnée.

La présente invention n'est nullement limitée au mode de réalisation décrit et représenté, mais l'homme du métier pourra envisager toute variante conforme à son esprit.

En particulier, il pourra être envisagé, dans le cadre de l'invention, que le clavier comprenne dans une variante non représentée un bouton déplaçable commandant une résistance variable, le déplacement du bouton correspondant à la sélection d'un niveau cible à prendre par l'appareil, et une touche de mise en marche reliée par des moyens de liaison à l'unité de traitement et intégrée au bouton déplaçable, l'unité de traitement comportant, d'une part, des moyens de lecture de la valeur de résistance de la résistance variable, lors de l'actionnement de la touche de mise en marche, la valeur de résistance étant représentative de la position du bouton, et, d'autre part, des moyens de détermination, à partir de ladite valeur de résistance lue, une consigne d'appareil à transmettre audit appareil pour que ce dernier prenne le niveau cible sélectionné correspondant.

Le procédé et le dispositif objet de l'invention s'applique à toute commande directe d'un niveau d'intensité souhaité (lumière, chaleur...) et à toute commande directe de positionnement (volet roulant, store...).

**Revendications**

1. Dispositif de commande d'un appareil (300) adapté à prendre un niveau sélectionné parmi une plage de niveaux, qui comporte un clavier (110) représentatif de ladite plage de niveaux pour permettre à un utilisateur de sélectionner un niveau, caractérisé en ce qu'il comporte en outre :

   - une touche d'arrêt (120) dudit appareil (300), et
   - une unité de traitement (200) reliée audit clavier et à ladite touche d'arrêt pour :

     - dans le cas où l'appareil (300) est à l'arrêt et ledit clavier (110) est actionné pour sélectionner un niveau cible, faire prendre à l'appareil le niveau cible sélectionné,
     - dans le cas où l'appareil (300) est à l'arrêt et la touche d'arrêt est actionnée, maintenir l'appareil à l'arrêt,
     - dans le cas où ledit appareil (300) est en fonctionnement et ledit clavier (110) est actionné pour sélectionner un niveau cible, faire prendre à l'appareil le niveau cible sélectionné s'il est différent de son niveau courant, et
     - dans le cas où l'appareil (300) est en fonctionnement et que la touche d'arrêt est actionnée, arrêter ledit appareil.

**2.** Dispositif selon la revendication 1, caractérisé en ce que l'unité de traitement comprend des moyens pour surveiller de manière distincte l'actionnement du clavier et l'actionnement de la touche d'arrêt.

**3.** Dispositif selon l'une des revendications 1 ou 2, caractérisé en ce que l'unité de traitement (200) comprend :

- une interface d'entrée (210) reliée audit clavier et à ladite touche d'arrêt,
- une interface de sortie (230) reliée audit appareil (300), et
- un microcontrôleur (220) relié à l'interface d'entrée (210) et à l'interface de sortie (230),

l'interface de sortie fournissant à l'appareil (300) une consigne d'appareil déterminée sous le contrôle du microcontrôleur (220).

**4.** Dispositif selon l'une des revendications 1 à 3, caractérisé en ce qu'il comprend des moyens de visualisation (130), du niveau courant de l'appareil (300), reliés à ladite unité de traitement (200).

**5.** Dispositif selon la revendication 4, caractérisé en ce que ladite unité de traitement (200) est apte à maintenir lesdits moyens de visualisation (130) actifs après l'arrêt de l'appareil pour visualiser le niveau courant qu'avait ledit appareil avant son arrêt.

**6.** Dispositif selon la revendication 5, caractérisé en ce que ladite unité de traitement (200) est apte à mettre en état de veille lesdits moyens de visualisation après l'arrêt de l'appareil.

**7.** Dispositif selon la revendication 6, caractérisé en ce que la mise en état de veille desdits moyens de visualisation (130) consiste à réduire l'intensité lumineuse desdits moyens de visualisation.

**8.** Dispositif selon l'une des revendications 4 à 7, caractérisé en ce qu'il comporte des moyens de visualisation du changement de niveau de l'appareil.

**9.** Dispositif selon l'une des revendications 4 à 8, caractérisé en ce que les moyens de visualisation (130) comprennent au moins une rangée de diodes électroluminescentes (131) positionnée en regard dudit clavier (110).

**10.** Dispositif selon l'une des revendications 4 à 8, caractérisé en ce que les moyens de visualisation comprennent au moins une rangée de bargraphes.

**11.** Dispositif selon l'une des revendications 1 à 10, caractérisé en ce qu'il comporte des moyens de balisage du clavier.

**12.** Dispositif selon l'une quelconque des revendications précédentes, caractérisé en ce que le clavier (110) comprend au moins une région tactile pourvue de moyens de reconnaissance d'une zone d'appui d'un doigt sur ladite région tactile correspondant à la sélection d'un niveau cible à prendre par l'appareil, lesdits moyens de reconnaissance étant reliés à l'unité de traitement qui est apte, à partir de la reconnaissance de ladite zone d'appui, à déterminer et à transmettre audit appareil la consigne d'appareil pour qu'il prenne le niveau cible sélectionné.

**13.** Dispositif selon la revendication 12, caractérisé en ce que la région tactile (110) comprend trois sous régions dont :

- une région haute (110'') représentative d'un niveau limite haut à prendre par l'appareil,
- une région basse (110'') représentative d'un niveau limite bas à prendre par l'appareil, et
- une région intermédiaire (110') comprise entre les régions haute et basse, représentative d'une plage de niveaux intermédiaires à prendre par l'appareil, comprise entre les niveaux limites haut et bas.

**14.** Dispositif selon l'une des revendications 12 ou 13, caractérisé en ce que lesdits moyens de reconnaissance de ladite région tactile sont du type résistif.

**15.** Dispositif selon la revendication 14, caractérisé en ce que lesdits moyens de reconnaissance comprennent un circuit ouvert dont les bornes sont reliées à ladite unité de traitement, et formé de deux parties (110a, 110b) en forme de peigne, dont les dos résistifs sont sensiblement parallèles et les dents conductrices sont enchevêtrées, ladite région tactile étant agencée de sorte que l'appui d'un doigt sur une zone de la région tactile provoque la fermeture dudit circuit par la mise en contact d'au moins une dent d'une partie (110a) avec au moins une dent de l'autre partie (110b), ladite unité de traitement comprenant, d'une part, des moyens de lecture (210) de la valeur de résistance existant entre les bornes dudit circuit fermé, cette valeur de résistance étant représentative de ladite zone d'appui, et, d'autre part, des moyens de détermination (220), à partir de ladite valeur de résistance lue, d'une consigne d'appareil à transmettre audit appareil pour que ce dernier prenne le niveau cible sélectionné correspondant.

16. Dispositif selon la revendication 15, caractérisé en ce que ladite région tactile est pourvue de pistes conductrices de courant (111) sensiblement parallèles, s'étendant généralement transversalement aux dents enchevêtrées des deux parties (110a, 110b) dudit circuit, au-dessus de celles-ci, lesdites pistes conductrices étant destinées, lors de l'appui d'un doigt sur la région tactile, à venir au contact d'au moins une dent de chacune des parties dudit circuit pour le fermer au niveau de ladite zone d'appui.

17. Dispositif selon l'une quelconques des revendications 1 à 11, caractérisé en ce que le clavier comprend un bouton déplaçable commandant une résistance variable, le déplacement du bouton correspondant à la sélection d'un niveau cible à prendre à l'appareil, et une touche de mise en marche reliée à l'unité de traitement et intégrée au bouton déplaçable, ladite unité de traitement comportant, d'une part, des moyens lecture de la valeur de résistance de la résistance variable, lors de l'actionnement de ladite touche de mise en marche, ladite valeur de résistance étant représentative de la position dudit bouton, et, d'autre part, des moyens de détermination, à partir de ladite valeur de résistance lue, d'une consigne d'appareil à transmettre audit appareil pour que ce dernier prenne le niveau cible sélectionné correspondant.

18. Dispositif selon l'une des revendications 15 à 17, dans leur dépendance à l'une des revendications 4 à 14, caractérisé en ce que ladite unité de traitement (200) comprend des moyens de détermination (220), à partir de ladite valeur de résistance lue, d'une consigne de visualisation, et des moyens de transmission de cette consigne de visualisation auxdits moyens de visualisation pour visualiser le niveau cible sélectionné correspondant pris par ledit appareil.

19. Dispositif selon l'une des revendications précédentes, caractérisé en ce qu'il comprend une installation externe reliée à ladite unité de traitement, cette installation externe étant apte à fournir une consigne de sélection d'un niveau cible dans ladite plage de niveaux à l'unité de traitement qui est apte à transmettre cette consigne audit appareil pour lui faire prendre le niveau cible sélectionné s'il est différent de son niveau courant.

20. Dispositif selon la revendication 19, caractérisé en ce que l'unité de traitement comprend des moyens de gestion des priorités entre les informations qu'elle reçoit du clavier actionné et de l'installation externe, pour que l'information provenant de l'actionnement du clavier soit prioritaire sur l'information provenant de ladite installation externe.

21. Dispositif selon l'une des revendications 19 ou 20, caractérisé en ce que l'installation externe est une centrale météorologique.

22. Dispositif selon l'une des revendications 19 ou 20, caractérisé en ce que l'installation externe est un détecteur de présence d'une personne.

23. Dispositif selon l'une des revendications 19 ou 20, caractérisé en ce que l'installation externe est un thermostat.

24. Dispositif selon l'une quelconques des revendications précédentes, caractérisé en ce que l'appareil est un appareil d'éclairage, et les niveaux à prendre par celui-ci sont des niveaux d'intensité lumineuse variant entre un niveau limite inférieur correspondant à une intensité minimale et un niveau limite supérieur correspondant à une intensité maximale, ladite unité de traitement étant apte, à partir de l'actionnement du clavier, à déterminer et à transmettre à l'appareil d'éclairage une proportion d'intensité lumineuse.

25. Dispositif selon la revendication 24, caractérisé en ce que l'unité de traitement est apte à donner à l'appareil d'éclairage un accès direct au niveau d'intensité lumineuse sélectionné à partir du clavier.

26. Dispositif selon l'une quelconque des revendications 1 à 23, caractérisé en ce que l'appareil est un volet roulant, et les niveaux à prendre par celui-ci sont des positions du volet variant entre des niveaux limites haut et bas correspondant à des fins de courses haute et basse du volet, l'unité de traitement étant apte, à partir de l'actionnement du clavier, à déterminer et à transmettre au volet un ordre de montée ou de descente pendant un temps donné de sorte que ledit volet atteigne la position sélectionnée.

**27.** Dispositif selon la revendication 26, caractérisé en ce que la détermination du temps de montée ou de descente du volet est réalisée par l'unité de traitement à partir d'une opération d'initialisation (1002) au cours de laquelle l'unité de traitement fait faire au volet un trajet entre les fins de courses haute et basse, mesure le temps que met le volet à parcourir ledit trajet, et mémorise le temps mesuré.

**28.** Dispositif selon l'une des revendications 26 ou 27, caractérisé en ce que l'unité de traitement comprend des moyens pour, d'une part, mémoriser le niveau courant de l'appareil, c'est-à-dire la position courante du volet, et, d'autre part, lorsqu'un niveau cible est sélectionné par actionnement du clavier, c'est à dire une position cible du volet, déterminer et transmettre audit volet l'ordre de montée ou de descente pendant un temps donné pour qu'il atteigne, à partir de sa position courante, la position cible sélectionnée.

**29.** Dispositif selon l'une des revendications 26 à 28, caractérisé en ce que l'unité de traitement comprend des moyens pour amener directement le volet en fin de course haute respectivement basse lorsqu'un niveau cible est sélectionné par actionnement du clavier au-dessus respectivement en dessous d'un seuil haut (R haut) respectivement bas (R bas) déterminé.

**30.** Dispositif selon l'une des revendications 26 à 29, caractérisé en ce que l'unité de traitement comprend des moyens pour réaliser une opération de mise à jour du temps de déplacement du volet pour une course entière, lorsque le volet arrive en fin de course haute respectivement basse alors que le temps de montée respectivement de descente déterminé par ladite unité de traitement n'est pas encore totalement écoulé.

**31.** Procédé de commande d'un volet roulant positionné dans une position courante pour l'amener dans une position cible, à l'aide d'un dispositif selon l'une des revendications 26 à 30, caractérisé en ce qu'à partir de l'actionnement du clavier (1003) il comprend les étapes suivantes :

a) déterminer la position cible (1030) sélectionnée par actionnement du clavier,
b) déterminer le temps de déplacement (1051) du volet entre sa position courante et la position cible,
c) déterminer le sens de déplacement (1052), montée ou descente, du volet pour qu'il atteigne la position cible sélectionnée à partir de sa position courante,
d) faire monter ou descendre le volet (1053, 1054), pendant le temps déterminé à l'étape b) de sorte que le volet atteigne la position cible,
e) mémoriser la position cible en position courante du volet (1060).

**32.** Procédé selon la revendication 31, caractérisé en ce qu'il comprend une opération d'initialisation (1002) effectuée lors de la mise sous tension du dispositif de commande, qui comprend les étapes consistant à :

1) amener le volet (1020) jusqu'à une fin de course,
2) lancer un chronomètre (1022),
3) amener le volet (1022) jusqu'à la fin de course opposée,
4) arrêter le chronomètre et lire la valeur du temps compté par le chronomètre (1024), et
5) mémoriser (1024) ladite valeur du temps compté par le chronomètre comme étant le temps de déplacement du volet pour une course entière.

**33.** Procédé selon la revendication 32, caractérisé en ce que lors de l'opération d'initialisation (1002), à l'étape 1) on fait descendre le volet jusqu'en fin de course basse, à l'étape 3) on fait monter le volet jusqu'en fin de course haute, et à l'étape 5) le temps de déplacement du volet pour une course entière est un temps de montée.

**34.** Procédé selon l'une des revendications 32 ou 33, caractérisé en ce que, lors de l'opération d'initialisation (1002), on initialise une consigne de visualisation de sorte que l'on visualise la fin de course haute du volet.

**35.** Procédé selon l'une des revendications 31 à 34, caractérisé en ce que lorsque la position cible sélectionnée par actionnement du clavier est supérieure ou égale, respectivement inférieure ou égale, à un seuil haut (R haut), respectivement bas (R bas), on amène directement (1058, 1059) le volet en fin de course haute respectivement basse, indépendamment du temps de déplacement du volet déterminé.

**36.** Procédé selon l'une des revendications 31 à 35, caractérisé en ce que, lorsqu'à l'étape d) le volet atteint une fin de course haute ou basse alors que le temps déterminé à l'étape b) n'est pas encore totalement écoulé, on réalise une opération de mise à jour du temps de déplacement du volet pour une course entière (1063).

**37.** Procédé selon l'une des revendications 31 à 36,caractérisé en ce qu'à l'étape a) on lit une valeur de résistance existant aux bornes d'un circuit résistif du clavier, et à l'étape b) on détermine le temps de déplacement du volet en fonction du temps de déplacement du volet pour une course entière, de la différence des valeurs de résistance correspondant à la position courante et à la position cible et de la différence des valeurs de résistance (R haut, R bas) correspondant aux fins de courses haute et basse.

**38.** Procédé selon l'une des revendications 34 à 37, caractérisé en ce qu'à partir de l'opération d'initialisation on visualise (1061), par allumages et extinctions successifs de diodes électroluminescentes, le déplacement du volet entre sa position courante et la position cible.

**39.** Procédé selon la revendication 38, caractérisé en ce que, lors de l'actionnement du clavier, on visualise la position cible, simultanément au déplacement du volet.

**40.** Procédé selon l'une des revendications 31 à 39, caractérisé en ce que le volet peut être arrêté à tout moment par actionnement de la touche d'arrêt (120).

**41.** Procédé selon la revendication 38 ou 39, caractérisé en ce qu'entre deux actionnements du clavier on visualise (1060) la position courante du volet.

**42.** Module utilisateur pour un dispositif de commande d'un appareil selon l'une quelconque des revendications 1 à 30, caractérisé en ce qu'il comprend :

- une région tactile (110) allongée constituant le clavier de commande du dispositif de commande,
- une touche d'arrêt (120) placée à proximité d'une extrémité de la région tactile, et
- des moyens de visualisation (130) du niveau courant et du niveau cible de l'appareil s'étendant en ligne le long d'au moins un côté longitudinal de ladite région tactile (110).

**43.** Module selon la revendication 42, caractérisé en ce que lesdits moyens de visualisation (130) s'étendent à partir de la touche d'arrêt jusqu'à l'extrémité opposée de la région tactile (110).

**44.** Module selon l'une des revendications 42 ou 43, caractérisé en ce que les moyens de visualisation (130) s'étendent le long des deux côtés longitudinaux de ladite région tactile.

**45.** Module selon l'une des revendications 42 à 44, caractérisé en ce que les moyens de visualisation (130) comprennent au moins une rangée de diodes (131) espacées régulièrement le long de ladite région tactile.

**46.** Module selon l'une des revendications 42 à 45, caractérisé en ce que ladite région tactile (110) est subdivisée en trois sous régions :

- une région haute (110") représentative du niveau limite haut à prendre par l'appareil,
- une région basse (110") représentative du niveau limite bas à prendre par l'appareil, et
- une région intermédiaire (110') comprise entre les régions haute et basse, représentative d'une plage de niveaux intermédiaires à prendre par l'appareil, comprise entre les niveaux limites haut et bas.

**47.** Module (100) selon l'une des revendications 42 à 46, caractérisé en ce que la région tactile (110) est pourvue de moyens de reconnaissance d'une zone d'appui d'un doigt sur ladite région tactile correspondant à la sélection d'un niveau cible à prendre par l'appareil, lesdits moyens de reconnaissance étant reliés à l'unité de traitement qui est apte, à partir de la reconnaissance de ladite zone d'appui, à déterminer et à transmettre audit appareil la consigne d'appareil pour qu'il prenne le niveau cible sélectionné.

**48.** Module (100) selon la revendication 47, caractérisé en ce que lesdits moyens de reconnaissance de ladite région tactile sont du type résistif.

**49.** Module (100) selon la revendication 48, caractérisé en ce que lesdits moyens de reconnaissance comprennent un circuit ouvert dont les bornes sont reliées à ladite unité de traitement, et formé de deux parties (110a, 110b) en forme de peigne, dont les dos résistifs sont sensiblement parallèles et les dents conductrices sont enchevêtrées, ladite région tactile étant agencée de sorte que l'appui d'un doigt sur une zone de la région tactile provoque la fermeture dudit circuit par la mise en contact d'au moins une dent d'une partie (110a) avec au moins une dent de l'autre partie (110b), ladite unité de traitement comprenant, d'une part, des moyens de lecture (210) de la valeur de résistance existant entre les bornes dudit circuit fermé, cette valeur de résistance étant représentative de ladite zone d'appui, et, d'autre part, des moyens de détermination (220), à partir de ladite valeur de résistance lue, d'une consigne d'appareil à transmettre audit appareil pour que ce dernier prenne le niveau cible sélectionné correspondant.

50. Module (100) selon la revendication 49, caractérisé en ce que ladite région tactile est pourvue de pistes conductrices de courant (111) sensiblement parallèles, s'étendant généralement transversalement aux dents enchevêtrées des deux parties (110a, 110b) dudit circuit, au-dessus de celles-ci, lesdits pistes conductrices étant destinées, lors de l'appui d'un doigt sur la région tactile, à venir au contact d'au moins une dent de chacune des parties dudit circuit pour le fermer au niveau de ladite zone d'appui.

51. Module (100) selon l'une des revendications 42 à 50, caractérisé en ce que la région tactile porte, à une extrémité respectivement à l'autre extrémité opposée, une indication pour l'utilisateur du niveau limite haut respectivement bas pouvant être pris par l'appareil.

52. Module (100) selon la revendication 51, caractérisé en ce que la touche d'arrêt (120) est positionnée à proximité de l'extrémité de la région tactile (110) portant l'indication du niveau limite bas pouvant être pris par l'appareil.

FIG .1

FIG.2

FIG.3

FIG.4

FIG.5

*FIG.6*

*FIG.7*

FIG.8

1004

LECTURE
VALEUR DE RESISTANCE

1010

1011

CONSIGNE D' APPAREIL = f1 (valeur résistance)

CONSIGNE DE VISUALISATION = f2 (valeur résistance)

FIG.9

CONSIGNE D' APPAREIL

C

f 1

Min

Min          R Max
VALEUR RESISTANCE

FIG.10

CONSIGNE DE VISUALISATION

C

f 2

Min

Min          R Max
VALEUR RESISTANCE

POSITION HAUT

FIG.11

BAS

t0      t'0          t'1    t1    TEMPS

*FIG.12*

CONSIGNE D' APPAREIL = DESCENTE

1002

1020

FIN COURSE ? — 1021

NON

OUI

1022

LANCER CHRONOMETRE

CONSIGNE D' APPAREIL = MONTEE

FIN COURSE ? — 1023

NON

OUI

1024

ARRET CHRONOMETRE

LECTURE CHRONOMETRE

TEMPS MONTEE = CHRONOMETRE-K

CONSIGNE D' APPAREIL = ARRET

CONSIGNE DE VISUALISATION = g (R haut)

NIVEAU COURANT = R haut

*FIG.13*

DETERMINATION DU NIVEAU CIBLE

1004

1030

NIVEAU CIBLE =
NIVEAU COURANT

OUI

1040

NON

1050

COMMANDE DE L'APPAREIL ET
DE LA VISUALISATION

*FIG.14*

1030

LECTURE VALEUR DE RESISTANCE — 1031

VALEUR DE
RESISTANCE > R
HAUT ?

1032

OUI

1033

NIVEAU CIBLE = R HAUT

NON

VALEUR DE
RESISTANCE <
R BAS ?

1034

OUI

1035

NIVEAU CIBLE = R BAS

NON

1036

NIVEAU CIBLE = VALEUR DE RESISTANCE

**FIG. 15**

1050

CALCUL DE T — 1051

1052

NIVEAU CIBLE < NIVEAU COURANT — OUI

1054

NON

1053

CONSIGNE D' APPAREIL=MONTEE

CONSIGNE D' APPAREIL= DESCENTE

LANCEMENT CHRONOMETRE — 1055

LECTURE CHRONOMETRE — 1056

1057

CHRONOMETRE ⩾ T ? — NON

OUI

1061

CALCUL DE CONSIGNE DE VISUALISATION

1058

NON

NIVEAU CIBLE = R haut Ou R bas ?

OUI

1062

FIN COURSE ? — NON

1059

FIN COURSE ? — NON

OUI

1063

OUI

MISE A JOUR TEMPS DE DEPLACEMENT DU VOLET POUR COURSE ENTIERE

1060

CONSIGNE D' APPAREIL = ARRET
NIVEAU COURANT = NIVEAU CIBLE
CONSIGNE DE VISUALISATION = g (niveau courant)

FIG.16

FIG.17

FIG.18

FIG.19

FIG.20

*FIG.21*

110''

R haut

100

110

110'

100

130

R bas

130

120        110''

*FIG.22*

CONSIGNE DE VISUALISATION

g

Min

R bas        R   R haut

VALEUR
RESISTANCE

| | Office européen des brevets | **RAPPORT DE RECHERCHE EUROPEENNE** | Numéro de la demande<br>EP 00 40 3637 |
|---|---|---|---|

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| Y | EP 0 574 637 A (EURO CP SARL)<br>22 décembre 1993 (1993-12-22)<br><br><br>* le document en entier * | 1-4,<br>8-10,12,<br>17-21,<br>25-30,<br>37-41,45 | G05B19/40<br>G05B19/425 |
| X | | 31-33,<br>35,36 | |
| | --- | | |
| Y | EP 0 784 146 A (SOMFY)<br>16 juillet 1997 (1997-07-16)<br>* le document en entier * | 1-3,40 | |
| | --- | | |
| Y | US 5 654 739 A (NAKAGAWA MASAYUKI ET AL)<br>5 août 1997 (1997-08-05)<br>* le document en entier * | 4,8,10,<br>18,38,39 | |
| | --- | | |
| Y | DE 296 02 328 U (AEG HAUSGERAETE GMBH)<br>5 juin 1997 (1997-06-05)<br>* le document en entier * | 9,45 | |
| | --- | | **DOMAINES TECHNIQUES RECHERCHES (Int.Cl.7)** |
| Y | US 5 818 428 A (BENTLEY JOHN R ET AL)<br>6 octobre 1998 (1998-10-06)<br>* le document en entier * | 12 | G05B |
| | --- | | |
| Y | WO 97 43747 A (INTERTACTILE TECHNOLOGIES CORP) 20 novembre 1997 (1997-11-20)<br>* figures * | 17,37 | |
| | --- | | |
| Y | US 5 449 987 A (MCMILLAN SCOTT D)<br>12 septembre 1995 (1995-09-12)<br>* abrégé; figures * | 19-21 | |
| | --- | | |
| Y | EP 0 268 933 A (SIEMENS AG)<br>1 juin 1988 (1988-06-01)<br>* le document en entier *<br>--- | 41 | |
| | -/-- | | |

Le présent rapport a été établi pour toutes les revendications

| Lieu de la recherche | Date d'achèvement de la recherche | Examinateur |
|---|---|---|
| LA HAYE | 24 avril 2001 | Hauser, L |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................
& : membre de la même famille, document correspondant

EPO FORM 1503 03.82 (P04C02)

| | Office européen des brevets | RAPPORT DE RECHERCHE EUROPEENNE | Numéro de la demande EP 00 40 3637 |

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| Y,D | US 5 485 058 A (WATSON DOUGLAS R ET AL) 16 janvier 1996 (1996-01-16) * le document en entier * | 22,25-30 | |
| Y | US 4 803 854 A (KIKUCHI KOJI ET AL) 14 février 1989 (1989-02-14) * figures * | 22 | |
| A | DE 91 10 348 U (BUHL AUTOMATIC INC.) 21 novembre 1991 (1991-11-21) * le document en entier * | 1-52 | |
| A | US 5 369 342 A (RUDZEWICZ ROBERT G ET AL) 29 novembre 1994 (1994-11-29) * le document en entier * | 1-52 | |
| A | DE 43 35 239 C (VDO SCHINDLING) 1 décembre 1994 (1994-12-01) * le document en entier * | 1-52 | |

**DOMAINES TECHNIQUES RECHERCHES (Int.Cl.7)**

Le présent rapport a été établi pour toutes les revendications

| Lieu de la recherche | Date d'achèvement de la recherche | Examinateur |
|---|---|---|
| LA HAYE | 24 avril 2001 | Hauser, L |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03 82 (P04C02)

**ANNEXE AU RAPPORT DE RECHERCHE EUROPEENNE
RELATIF A LA DEMANDE DE BREVET EUROPEEN NO.**  EP 00 40 3637

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

24-04-2001

| Document brevet cité au rapport de recherche | | Date de publication | Membre(s) de la famille de brevet(s) | | | Date de publication |
|---|---|---|---|---|---|---|
| EP 0574637 | A | 22-12-1993 | DE | 69218927 | D | 15-05-1997 |
| | | | DE | 69218927 | T | 04-09-1997 |
| EP 0784146 | A | 16-07-1997 | FR | 2743602 | A | 18-07-1997 |
| | | | ES | 2107408 | T | 01-12-1997 |
| | | | JP | 9195645 | A | 29-07-1997 |
| US 5654739 | A | 05-08-1997 | US | 5510809 | A | 23-04-1996 |
| DE 29602328 | U | 05-06-1997 | DE | 19624890 | A | 14-08-1997 |
| US 5818428 | A | 06-10-1998 | AUCUN | | | |
| WO 9743747 | A | 20-11-1997 | US | 5774115 | A | 30-06-1998 |
| | | | EP | 0939950 | A | 08-09-1999 |
| | | | JP | 2000510258 | T | 08-08-2000 |
| US 5449987 | A | 12-09-1995 | CA | 2112720 | A | 25-03-1995 |
| EP 0268933 | A | 01-06-1988 | DE | 3640371 | A | 09-06-1988 |
| US 5485058 | A | 16-01-1996 | US | 5336979 | A | 09-08-1994 |
| | | | US | 5621283 | A | 15-04-1997 |
| | | | CA | 2102679 | A | 13-05-1994 |
| | | | MX | 9307056 | A | 31-08-1994 |
| US 4803854 | A | 14-02-1989 | JP | 1019918 | B | 13-04-1989 |
| | | | JP | 1535734 | C | 21-12-1989 |
| | | | JP | 61162974 | A | 23-07-1986 |
| | | | CA | 1270916 | A | 26-06-1990 |
| DE 9110348 | U | 21-11-1991 | CA | 2050957 | A | 15-12-1992 |
| US 5369342 | A | 29-11-1994 | AUCUN | | | |
| DE 4335239 | C | 01-12-1994 | US | 5854545 | A | 29-12-1998 |

EPO FORM P0460

Pour tout renseignement concernant cette annexe : voir Journal Officiel de l'Office européen des brevets, No.12/82